# EUROPÄISCHE PATENTSCHRIFT

(11) **EP 2 036 961 B1**
(45) Veröffentlichungstag und Bekanntmachung des Hinweises auf die Patenterteilung: **30.11.2011**
(21) Anmeldenummer: 08161146.9
(22) Anmeldetag: 25.07.2008
(51) Int. Cl.: C09J 7/02, C09J 7/04

(54) **Doppelseitiges Klebeband zur Befestigung von schützenden Flächengebilden**
Double-sided adhesive tape for the fixation of protective sheets
Bande adhésive à double face pour la fixation d'une feuille de protection

(30) Priorität: 17.09.2007 DE 102007044322
(43) Veröffentlichungstag der Anmeldung: 18.03.2009
(73) Patentinhaber: TESA SE, 20253 Hamburg (DE)
(72) Erfinder: Böhm, Nicolai, 22559, Hamburg (DE); Himmelsbach, Peter, 21614, Buxtehude (DE); Barkley, Arne, 25551, Winseldorf (DE); Böhmer, Carsten, 22523, Hamburg (DE); Sell, Stefan, 24568, Kaltenkirchen (DE)

(56) Entgegenhaltungen:
- EP-A- 1 308 492
- EP-A- 1 464 687
- WO-A-2005/017061
- GB-A- 653 921
- JÜRGEN FALBE, MANFRED REGITZ: "Römpp Chemie Lexikon" 1992, GEORG THIEME VERLAG , STUTTGART NEW YORK , XP002506218 * Seite 3533 *
- POLIMERI EUROPA: "Greenflex ML 60 Technical Data Sheet"[Online] Mai 2006 (2006-05), XP002506197 Gefunden im Internet: URL:http://www.polimerieuropa.it/uk/PDF/Gr eenflex_ML60.pdf> [gefunden am 2008-11-28]

## Beschreibung

Die vorliegende Erfindung betrifft die Verwendung eines doppelseitigen Klebebands zur Befestigung von schützenden Flächengebilden.

Oberflächen, speziell in der Automobilindustrie werden immer öfter geschützt. Besonders beim Schutz eines vollständigen Fahrzeuges kommen immer innovativere Systeme zur Entwicklung. Beispielsweise sind Wachskonservierung, Transportschutzfolien und Vollschutz oder Teilschutzhauben genannt.

Diese sollen Schutz bieten gegen:
- Mechanische Beschädigungen (Kratzer),
- Industriestaub und Schmutz jeglicher Art,
- Flugrost und Funkenflug,
- Ölruß und Oberleitungsabrieb (Bahn),
- Tiersekrete, Vogelkot, Baumharze und Blütenstaub,
- Klima- und sonstige Umwelteinflüsse.

Die Wachskonservierung ist aus ökologischer Sicht nachteilig und obliegt immer intensiveren gesetzlichen Auflagen! Bei den Schutzhauben ist die Befestigung anspruchsvoll. Wichtig ist der Schutz des Fahrzeugs wider das Eindringen von Schmutz und Wasser. Fallweise werden hier Klebebänder angebracht, welche auf sensiblen Untergründen verklebt werden. Die Anforderungen an diese Klebebänder sind sehr umfassend.

Vorteilhaft sind Produkte, die kein eigenes Ablösen beziehungsweise Zerstören und keine Beschädigungen der Fahrzeugoberfläche und Anbauteile hervorrufen. Es wird eine Widerstandsfähigkeit bei Transporten bis zu einer Geschwindigkeit von bis zu 160 km/h gewünscht.

Die Materialien müssen nach je 24 h bei -40 °C und +80 °C eine ausreichende mechanische Festigkeit aufweisen, ferner die Resistenz bei Temperaturen von -20 °C bis +50 °C, wobei diese hier ohne Beanstandung vom Fahrzeug zu entfernen sein sollten Bei allen Witterungsbedingungen dürfen keine Wechselwirkungen mit der Lackoberfläche (1 K- und 2K-Klarlack), mit Zierteilen, mit Dichtungen oder mit Scheiben entstehen.

Fallweise soll für spezielle Fahrzeuge zumindest der Teil der Schutzvorrichtung, mit Materialien mit einer Wasserdampfdurchlässigkeit von mindestens 40 g/(m² * d) auszustatten sein.

Zum Abdichten und/oder Befestigen zeigen sich Klebebänder vorteilhaft, welche jedoch vernäht oder verschweißt werden müssen. Beim Vernähen werden entstehen nachteilig Einstiegslöcher, wodurch Schmutz und Wasser unter die Vorrichtung gelangen können. Nachteilig sind auch Materialien, die durch die Nählöcher so an Stabilität verlieren, dass sie abreißen. Beispielhaft sind hier Klebebänder basierend auf dünnen Folien zu nennen. Ferner ist der Prozess zeitaufwändig und bedarf einer Vorrichtung. Fehlermöglichkeiten können beim Positionieren erfolgen. Die verbleibende Verklebungsfläche ist durch die Vernähung verringert, dies macht beispielhaft bis zu 30 % des Klebematerials aus.

Beim Verschweißen eigenen sich nur sehr spezielle Materialien. Beispielhaft lassen sich faserige Flächengebilde auf Zell- oder Baumwollbasis wie Vliese oder Gewebe nicht verschweißen. Ebenfalls wird die Oberfläche des Flächengebildes verändert, und die Verklebungsfläche ist durch die Verarbeitung deutlich reduziert. An der Nahtstelle kann es je nach Schweißstelle zu einer Sollbruchstelle kommen, welche dann nicht mehr den Anforderungen entspricht und sich unvorteilhaft löst. Zusätzlich ist der Prozess zeitaufwändig und bedarf Vorrichtungen zur Herstellung.

Die EP 1 308 492 A1 offenbart ein doppelseitig klebendes Produkt, das zur dauerhaften Verklebung von Gummiprofilen auf beispielswiese Autolacken eingesetzt wird.
Das dortige Klebeband besteht aus einem Polyurethanträger, auf den oberseitig eine hitzeaktiverbare Klebemasse sowie unterseitig eine acrylatbasierende aufgetragen sind. Die acrylatbasierende Masse dient zur dauerhaften Fixierung des Klebebands auf dem Untergrund, die hitzeaktivierbare zur Befestigung des Gummiartikels.

Aufgabe der Erfindung ist es ein Klebeband zu entwickeln, welches zur Verklebung von schützenden Flächengebilden auf Untergründen geeignet ist und welches die bekannten Nachteile des Standes der Technik nicht aufweist.

Gelöst wird die Aufgabe durch ein doppelseitiges Klebeband, wie es im Anspruch 1 dargelegt ist. Der Unteranspruch umfasst eine vorteilhafte Variante des Erfindungsgegenstands.

Demgemäß betrifft die Erfindung die Verwendung eines doppelseitigen Klebebandes zur Befestigung von großen Flächengebilden zum Transport- und/oder Montageschutz auf Untergründen wie Automobillack, bestehend aus einer ersten Klebeseite A aus einer Klebemasse A, die Isobutylkautschuk oder dessen Derivate oder Abmischungen beinhaltet, und aus einer zweiten Klebeseite B aus einer Klebemasse B, die auf Polymeren, gewonnen aus der Polymerisation von Acrylsäure und deren Abkömmlingen, bevorzugt deren Ester, basiert und optional einem Träger, und wobei die Verklebung des Flächengebildes mit dem Klebeband derart erfolgt, dass die Klebemasse B dem Flächengebilde zugewandt ist.

Allgemein besteht der erfindungsgemäße Gegenstand in der Verwendung eines Klebebandes mit zwei Klebeschichten. In einer vorteilhaften Ausführung sind diese von einem Trägermaterial unterstützt. Dieses kann ein Gewebe, Gewirke, Gelege, Vlies, Folie, Papier, und deren Verbundwerkstoffe und Kombinationsprodukte sein, welche auf natürliche oder synthetische Materialien oder deren Kombination oder Mischung basieren.

Demzufolge werden vorteilhafterweise polymere Folien, Vliese oder Gewebe aus Polypropylen, Polyester, Polyamid, Polyurethan oder Polyethylen sowie auch in Kombination mit mineralischen Fasern wie Glasfasern oder Kohlenstofffasern oder aus Produkten wie Gewebe, Gelege und Gewirke mit Cellolose oder Baumwollfasern, ferner metallischen Ursprungs eingesetzt. Für spezielle Anwendungen können auch Mischprodukte wir Compounds oder Mischfaserprodukt, gegebenenfalls als Mischfaserfäden, -garne oder -zwirne eingesetzt werden. Diese können teilweise gefärbt oder anderweitig ausgerüstet sein, um das Trägermaterial optische oder mechanische Merkmale und Eigenschaften zu verleihen.
In alternativen Ausführungen können auch Fasern natürlichen Ursprungs wie Baumwolle, Seide, Flachs oder Zellwolle verwendet werden.

Bei der alternativen Ausführungsform des Erfindungsgegenstands wird ein Vlies als Trägermaterial zum Maskieren von Oberflächen eingesetzt. Das Vlies ist dabei durch die Bildung von Nähten, die von Maschen aus den Fasern des Vlieses gebildet werden, verstärkt, wobei vorteilhafterweise die Anzahl der Nähte auf dem Vlies mindestens 3/cm, bevorzugt 5/cm bis 50/cm, beträgt.

Die Höchstzugkraft des Erfindungsgegenstands beträgt mindestens 10 N/cm, bevorzugt 15 bis 450 N/cm, besonders bevorzugt 20 bis 250 N/cm, wobei sich die Kraft auf die Breite des Erfindungsgegenstands bezieht.

Die Dehnung des Klebebandes beträgt im Allgemeinen weniger als 1500 %. Bei Trägermaterialien auf Folienbasis zwischen 10% und 1000 %, bevorzugt zwischen 15 % und 800 %, besonders bevorzugt zwischen 15 % und 500 %. Bei Trägermaterialien auf Vliesbasis zwischen 10 % und 400 %, bevorzugt zwischen 15 % und 300 %, besonders bevorzugt zwischen 15 % und 250 %. Gewebe weisen eine Dehnbarkeit von 5 bis 50 %, bevorzugt 5 bis 25% auf.

In einer weiteren vorteilhaften Ausführungsform ist der Erfindungsgegenstand von Hand senkrecht zur Orientierung und/oder in Richtung der Nähte reißbar. Dieses findet häufig dann Anwendung, wenn das erfindungsgemäße Produkt auf sich selbst zur Rolle gewickelt wird.

Bei einer anderen Ausführungsform ist diese Reißbarkeit nicht notwendig. Hier kann es sich um gestanzte Produkte zum Verkleben auf dem großen Flächengebilden handeln.

Vorzugsweise enthält das Klebeband Substanzen, die UV LICHT absorbieren.

Zur Klassifizierung werden die Kleberseiten mit A und B bezeichnet.

Die selbstklebrige Beschichtung der Klebemassen ist sowohl durch Direktbeschichtung als auch durch Transferbeschichtung möglich. Bei der Transferbeschichtung wird ein Hilfsträger wie Trennpapier, -folie, Walze oder Gurtband zuerst beschichtet und der eigentliche Träger dann zugeführt. Ferner ist es möglich, die Klebemasse partiell auf dem Träger aufzutragen, beispielsweise durch Rasterdruck, Siebdruck, Thermoflexodruck oder Tiefdruck. Eine vollflächige Beschichtung ist jedoch ebenfalls möglich. Ein Verspinnen oder Versprühen kann dem Produkt besondere Eigenschaften verleihen.

Der erfindungsgemäße Gegenstand kann ein oder beidseitig mit einer abhäsiven Eindeckung eingedeckt worden sein.

Ferner sind weitere Verarbeitungsschritte wir Laminieren, Kaschieren, Stanzen, Bedrucken, Neutralisieren, Aktivieren, Vernetzen, Schneiden, Stanzen, Prägen und weitere dem Stand der Technik zu entnehmen Techniken.

Das erfindungsgemäß verwendete Klebeband weist auf der Kleberseite B eine Klebkraft auf Stahl von mindestens 0,5 N/cm (Beschichtungsbreite) auf, besonders eine Klebkraft zwischen 1,0 N/cm und 25 N/cm, besonders bevorzugt 1,5 bis 22 N/cm. Auf anderen Untergründen können andere Klebkräfte erreicht werden. Der Schmelzpunkt der Klebemasse B ist größer 50 °C, bevorzugt zwischen 60°C und 300°C und besonders bevorzugt zwischen 70°C und 150°C.

Der Masseauftrag für die Kleberseite B beträgt vorzugsweise mehr als 12 g/m². In vorteilhaften Ausführungen zwischen 15 und 120 g/m² und besonders vorteilhaft zwischen 17 g/m² und 80 g/m².

Das erfindungsgemäß verwendete Klebeband weist auf der Kleberseite A eine Klebkraft auf Stahl von mindestens 0,2 N/cm (Beschichtungsbreite) auf, besonders eine Klebkraft zwischen 0,5 N/cm und 10 N/cm, besonders bevorzugt 0,5 bis 7 N/cm. Ebenfalls können auf anderen Untergründen andere Klebkräfte erreicht werden. Der Masseauftrag für die Kleberseite A beträgt mehr als 10g/m². In vorteilhaften Ausführungen zwischen 12 und 120 g/m² und besonders vorteilhaft zwischen 17 g/m² und 80m g/m².

Weiter vorzugsweise können die Klebemassen reaktiv sein.

Weiterhin als vorteilhaft hat sich herausgestellt, dass der Erfindungsgegenstand ein Flächengewicht von weniger als 500 g/m² aufweist. Für flache Verklebungen werden bevorzugt 20 bis 400 g/m², besonders bevorzugt 30 bis 300 g/m² eingesetzt.

Besonders vorteilhaft lassen sich die beschriebenen Klebebänder zum Verkleben eines Flächengebildes zum Schutz bei Transport oder Montage auf einem Untergrund verwenden, wobei das Flächengebilde eine Abmessung von mehr als einem Quadratmeter aufweist

Als Flächengebilde werden unter anderem Vollschutzhauben und Teilschutzhauben verstanden, die auch eine dreidimensionale Ausprägung haben können. Die Grundfläche ist größer als ein Quadratmeter, bevorzugt größer als zwei Quadratmeter, besonders bevorzugt bis zu zwölf Quadratmeter.
Vorteilhaft sind dreidimensionale Formen, die dem zu schützenden Gegenstand, insbesondere der Fahrzeugform nahe kommen.

In einer besonders bevorzugten Ausführung wird zuerst die Kleberseite B an das große Flächengebilde befestigt und zu einem späteren Zeitpunkt die Klebeseite A auf das zu schützende Substrat verklebt. Dieses kann zum Abdichten oder/und zum Befestigen erfolgen, wobei die Ausführung dann unterschiedlich ausgestaltet wird.

Vorzugsweise ruft die zum Flächengebilde zeigende Klebermasse eine permanente Verklebung hervor, welche nicht mehr zerstörungsfrei entfernbar ist.
Weiter vorzugsweise ist die dem zu schützenden Gegenstand zugewandte Klebemasse rückstandsfrei vom zu verklebenden Substrat ablösbar.

## Patentansprüche

1. Verwendung eines doppelseitigen Klebebands zum Verkleben eines Flächengebildes auf Automobillack zum Schutz bei Transport oder Montage,
wobei das Flächengebilde eine Abmessung von mehr als einem Quadratmeter aufweist,
wobei das Klebeband besteht aus einer ersten Klebeseite A aus einer Klebemasse A, die Isobutylkautschuk oder dessen Derivate oder Abmischungen beinhaltet, und aus einer zweiten Klebeseite B aus einer Klebemasse B, die auf Polymeren, gewonnen aus der Polymerisation von Acrylsäure und deren Abkömmlingen, bevorzugt deren Ester, basiert, und optional einem Träger,
und wobei die Verklebung des Flächengebildes mit dem Klebeband derart erfolgt, dass die Klebemasse B dem Flächengebilde zugewandt ist.

2. Verwendung nach Anspruch 1,
**dadurch gekennzeichnet, dass**
der Träger ein Gewebe, insbesondere mit einer Dicke von 40 bis 300 µm, ist.

## Claims

1. Use of a double-sided adhesive tape for adhesively bonding a sheetlike structure to an automotive finish for the purpose of protection in transit or assembly, the sheetlike structure having dimensions of more than one square metre, the adhesive tape consisting of a first adhesive side A comprising an adhesive A which comprises isobutyl rubber or derivatives or blends thereof and of a second adhesive side B comprising an adhesive B which is based on polymers obtained from the polymerization of acrylic acid and derivatives thereof, preferably esters thereof, and optionally a backing, and the adhesive bonding of the sheetlike structure with the adhesive tape taking place in such a way that adhesive B faces the sheetlike structure.

2. Use according to Claim 1, **characterized in that** the backing is a woven fabric, more particularly having a thickness of 40 to 300 µm.

## Revendications

1. Utilisation d'un ruban adhésif double face pour coller une structure plane sur une laque automobile pour la protection pendant le transport ou le montage, la structure plane présentant une dimension supérieure à un mètre carré,
le ruban adhésif étant constitué d'un premier côté adhésif A en une composition adhésive A, qui contient un caoutchouc d'isobutyle ou ses dérivés ou mélanges,
et d'un second côté adhésif B en une composition adhésive B, qui est à base de polymères obtenus par la polymérisation d'acide acrylique et ses dérivés, de préférence ses esters, et éventuellement d'un support, et le collage de la structure plane avec le ruban adhésif ayant lieu de manière à ce que la composition adhésive B soit tournée vers la structure plane.

2. Utilisation selon la revendication 1, **caractérisée en ce que** le support est un tissu, notamment d'une épaisseur de 40 à 300 µm.
